# EUROPEAN PATENT SPECIFICATION

(11) **EP 2 134 991 B1**
(45) Date of publication and mention of the grant of the patent: **20.02.2013**
(21) Application number: 08762687.5
(22) Date of filing: 17.04.2008
(51) Int. Cl.: F16C 7/02, F16J 1/22, F16J 1/20, F16J 7/00

(54) **PINLESS CRANKTRAIN FOR INTERNAL COMBUSTION ENGINES AND COMPRESSORS**
STIFTLOSER KURBELANTRIEB FÜR VERBRENNUNGSMOTOREN UND KOMPRESSOREN
TRAIN DE VILEBREQUIN INTÉGRÉ DESTINÉ À DES MOTEURS À COMBUSTION INTERNE ET DES COMPRESSEURS

(30) Priority: 19.04.2007 DE 102007018435; 19.07.2007 EP 07014184
(43) Date of publication of application: 23.12.2009
(73) Proprietor: ThyssenKrupp Metalúrgica Campo Limpo Ltda., 13231-900 Campo Limpo Paulista-SP (BR)
(72) Inventor: FONSECA GALLI, Luis Antonio, CEP-13106-006 Campinas-SP (BR)
(74) Representative: Albrecht, Rainer Harald
(86) International application number: PCT/IB2008/000938
(87) International publication number: WO 2008/129391

(56) References cited:
- EP-A- 1 538 373
- WO-A-98/19067
- DE-A1- 3 504 410
- FR-A- 1 497 274
- JP-A- 63 065 180

## Description

The invention relates to a crankshaft drive, more preferably for internal combustion engines and compressors, with connecting rod and piston.

Within the scope of the mechanical knowledge the connecting rod has a small end bearing which is connected to the piston through a piston pin (EP 1 507 088 Al) . The piston pin is fixed in position through a locking ring. The assembling of the parts is expensive and its automation is very complex. The piston pin is an important component, responsible for transmission of forces, and must have an adequate cross section area. The small end bearing and more preferably the piston pin increase the inertial mass of the arrangement consisting of connecting rod and piston which, during operation of the crankshaft drive in the power stroke, are accelerated and decelerated in cycles.

EP 1 538 373 A1 discloses a crankshaft drive with a connecting rod and a piston, in which the connecting rod is linked with the piston by means of positive locking without a piston pin. The connecting rod comprises a swivel head as positive locking element on the piston end with an external circumferential curve contour and the piston comprises a swivel shell which is open towards the back of the piston and which has a guide surface contacting the curve contour. The swivel head is designed as a ball. The piston consists of two parts which form a cup shaped swivel shell and are connected by means of screws.

It is an object of the invention to design a connection between the rod and the piston which is easy to assemble. Furthermore, the arrangement consisting of a connecting rod and a piston shall have a low inertial mass.

According to the invention the problem is solved by the teaching of claim 1.

The connecting rod and the piston have integrated positive locking elements engaged with each other, preferably arranged in the main load direction of the connecting rod without offset relative to the longitudinal extent of the connecting rod and are molded onto the connecting rod and piston respectively in one piece in accordance with a particularly preferred embodiment of the invention. The longitudinal extension of the swivel head can be different from its shell. The positive locking between connecting rod and piston simplifies the assembly. Through the omission of the piston pin which is usual in the prior art and through the omission of assigned connection surfaces on the piston which are necessary to accommodate the piston pin the mass of the arrangement consisting of connecting rod and piston can be clearly reduced. Therefore there is a down sizing of the system, with the piston pin elimination according to the invention.

The connecting rod as positive locking element has a swivel head on the piston-facing end with an external circumferential curve contour. The piston features a swivel shell assigned to the connecting rod with a guide surface contacting the curve contour. The swivel shell is open towards the back of the piston.

The curve contour of the swivel head and the guide surface of the swivel shell assigned to the curve contour are formed by cylinder segment surfaces which extend over an angle of more than 180 degrees. The cylindrical surfaces of the swivel head and the swivel shell which are in contact with one another preferably extend over an angle between 200 and 300 degrees. For uniform surface pressure it is favorable that the swivel shell completely encloses the curve contour of the swivel head. The swivel head is joined by a neck with the contour recessed to the extent that the piston and the connecting rod can perform swivel movements relative to each other. The necessary swivel angle is determined by the dimensions of the connecting rod and the eccentric movement performed by the connecting rod in operation.

The swivel shell can be arranged in the interior of the piston. With such an arrangement the skirt of the piston receives at least one recess through which the piston head can be inserted into the swivel shell.

In a further development the invention contemplates that the swivel head of the connecting rod on the piston-facing end and/or the swivel shell of the piston, at least on their surfaces which are in contact, have a wear-resistant and/or friction-reducing bearing surface or coating. The coating - for example of hard materials to improve the wear resistance or of a friction-reducing non-metal alloy - can be applied to the outer surface of the swivel head with conventional coating methods, electroplating methods and such like. The bearing surface can consist of a thin inlay which is pressed into the swivel shell of the piston. For example copper or bronze alloys are possible as material for the bearing surface.

In addition small cavities (dimples) can be assigned to the swivel head of the connecting rod and/or to the swivel head of the piston in order to capture oil during operation and consequently reducing the friction losses and wear in this swivel joint.

The connecting rod can be designed as a forged, sintered or cast part. Forged components are characterized by favorable strength/weight ratio. Carbon steels such as C70 steels, heat-treatable steels as well as micro-alloyed steels are possible as materials. The connecting rod big end can be designed in two parts and contain a bearing shell.

In the following the invention is explained in detail by means of a drawing merely showing one exemplary embodiment; it shows schematically:
**Fig. 1** an arrangement of connecting rod and piston for a crankshaft drive,
**Fig. 2** the connecting rod of the arrangement shown in Fig. 1,
**Fig. 3** the piston of the arrangement shown in Fig. 1.

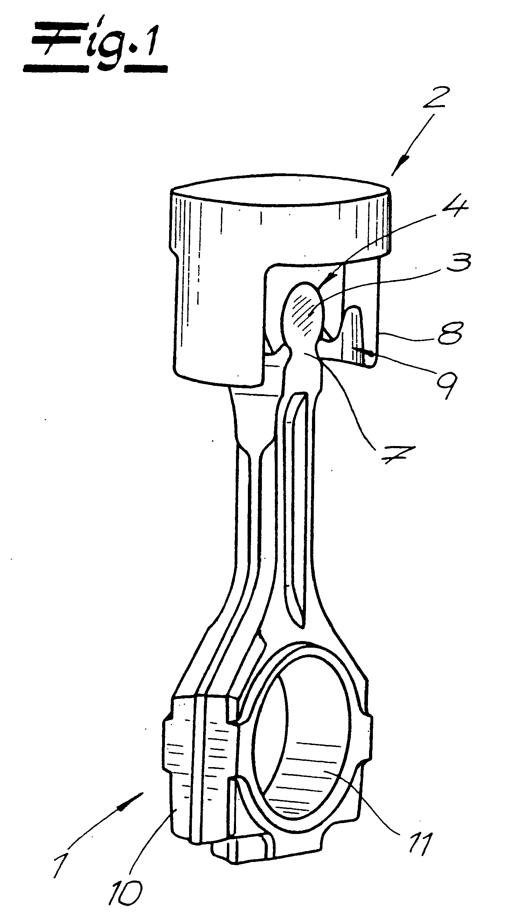

In Fig. 1 a connecting rod 1 and a piston 2 of a crankshaft drive, more preferably for internal combustion engines and compressors are shown. The connecting rod 1 is linked with the piston 2 by means of positive locking without a piston pin. The connecting rod 1 and the piston 2 have positive locking elements 3, 4 engaged with each other, which are arranged without offset relative to the longitudinal extension of the connecting rod 1 in the main load direction of the connecting rod 1. The locking elements 3, 4 are molded to the connecting rod 1 and the piston 2 respectively as one piece. Such connections are referred to as "positive lockings" or "form-fittings".

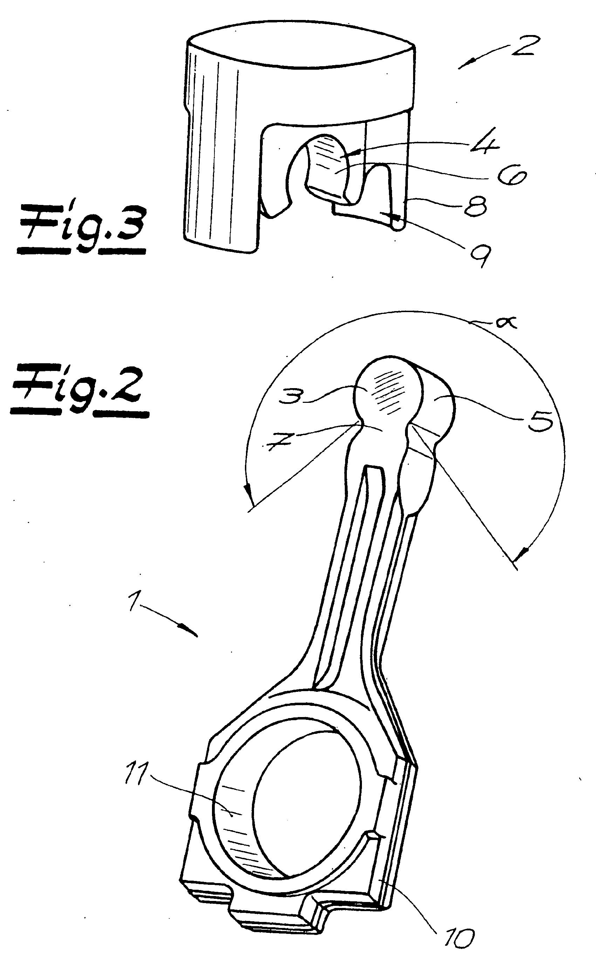

The connecting rod 1 as positive locking element 3 has a swivel head on the piston end with an external circumferential curve contour 5 (see Fig. 2). The positive locking element 4 of the piston 2 consists of a swivel shell which is open towards the piston back and which has a guide surface 6 (see Fig. 3), which is in contact with the curve contour 5 of the swivel head 3. The curve contour 5 of the swivel head 3 and the guide surface 6 of the swivel shell 4 assigned to the swivel head, are designed as cylinder segment surfaces which extend over an angle α of more than 180 degrees. The swivel shell 4 encloses the curve contour 5 of the swivel head 3 completely. From a comparative consideration of Fig. 1 and 2 one can see that a neck 7 follows the swivel head 3, the contour of which is recessed to the extent that the piston 2 and the connecting rod 1 are able to perform swivel movements relative to each other. The required swivel angle is determined by the dimensions of the connecting rod 1 and the eccentric movements of the connecting rod during the operation of the crankshaft drive.

From Fig. 1 and 3 it is evident that the swivel shell 4 is arranged in the interior of the piston 2 and that the skirt 8 of the piston contains recesses or openings 9 through which the swivel head 3 can be inserted into the swivel shell 4. The recesses 9 enable further reductions of the piston inertial mass. In the exemplary embodiment the piston skirt 8 has two recesses 9 which are symmetrically arranged on opposite skirt sections.

The connecting rod 1 can be designed as a forged part, sintered part or cast part. It has a divided connecting rod big end 10 in which a bearing shell 11 is inserted. The connecting rod 1 has an H-shaped cross sectional profile between the connecting rod big end 10 and the swivel head 3. It is important to emphasize that the invention works also with different cross sectional profiles between connecting rod big end 10 and the swivel head 3.

The swivel head 3 of the connecting rod 1 or the assigned swivel shell 4 of the piston can have a friction-reducing coating, e.g. a non-ferrous metal alloy based on copper or bronze.

The invention promotes a reduction of piston assembling mass and takt time due to the removal of a component (piston pin). This results also in a decrease of production cost, with less fixing and assembling devices, storage space and logistics expenses. Furthermore, the machining of both components is more simple, promoting a potential reduction in machining tools wear off.

## Claims

1. A crankshaft drive, more preferably for internal combustion engines and compressors, with connecting rod and piston, in which the connecting rod (1) is linked with the piston (2) by means of positive locking without a piston pin, the connecting rod (1) comprising a swivel head (3) as positive locking element on the piston end with an external circumferential curve contour (5) and the piston comprising a swivel shell (4) which is open towards the back of the piston and which has a guide surface (6) contacting the curve contour (5), **characterized in that** the curve contour of the swivel head (5) and the guide surface of the swivel shell (4) assigned to the curve contour are designed as cylinder segment surfaces which extend over an angle (α) of more than 180 degrees, that the swivel shell (4) completely encloses the curve contour (5) of the swivel head and that a neck (7) follows the swivel head (3), the contour of which is recessed to the extent that the piston (2) and the connecting rod (1) can perform swivel movements relative to one another.

2. The crankshaft drive according to claim 1, **characterized in that** the swivel shell (4) is arranged in the interior of the piston (2) and that the skirt of the piston (8) contains at least one recess (9) through which the swivel head can be inserted into the swivel shell (4).

3. The crankshaft drive according to claim 1 or 2, **characterized in that** the swivel head (3) on the piston end of the connecting rod (1) and/or the assigned swivel shell (4) of the piston (2) have a wear-resistant and/or friction-reducing bearing surface or coating at least on their surfaces which are in contact with each other.

4. The crankshaft drive according to claim 3, **characterized in that** the bearing surface or coating consists of a non-ferrous metal alloy, preferable an alloy containing copper or bronze.

## Patentansprüche

1. Kurbelwellentrieb, vorzugsweise für Verbrennungsmotoren und Kompressoren, mit einer Pleuelstange und einem Kolben, wobei die Pleuelstange (1) durch Formschluss ohne einen Kolbenbolzen mit dem Kolben (2) verbunden ist, wobei die Pleuelstange (1) einen Gelenkkopf (3) mit einer äußeren umfänglichen Kurvenkontur (5) als Formschlusselement an dem Kolbenende umfasst und der Kolben eine Gelenkschale (4) umfasst, die zu der Hinterseite des Kolbens hin offen ist, und die eine mit der Kurvenkontur (5) in Kontakt stehende Führungsfläche (6) aufweist, **dadurch gekennzeichnet, dass** die Kurvenkontur des Gelenkkopfs (5) und die Führungsfläche der Gelenkschale (4), die der Kurvenkontur zugeordnet ist, als Zylindersegmentoberflächen gestaltet sind, die sich über einen Winkel (α) von mehr als 180 Grad erstrecken, dass die Gelenkschale (4) die Kurvenkontur (5) des Gelenkkopfs vollständig umschließt, und dass auf den Gelenkkopf (3) ein Hals (7) folgt, dessen Kontur in einem derartigen Ausmaß vertieft ist, dass der Kolben (2) und die Pleuelstange (1) in Bezug zueinander Schwenkbewegungen durchführen können.

2. Kurbelwellentrieb nach Anspruch 1, **dadurch gekennzeichnet, dass** die Gelenkschale (4) im Inneren des Kolbens (2) angeordnet ist, und dass der Mantel des Kolbens (8) zumindest eine Aussparung (9) aufweist, durch die der Gelenkkopf in die Gelenkschale (4) eingesetzt werden kann.

3. Kurbelwellentrieb nach Anspruch 1 oder 2, **dadurch gekennzeichnet, dass** der Gelenkkopf (3) an dem Kolbenende der Pleuelstange (1) und/oder die zugehörige Gelenkschale (4) des Kolbens (2) wenigstens an ihren Flächen, die miteinander in Kontakt stehen, eine verschleißfeste und/oder reibungsverringernde Lageroberfläche oder Beschichtung aufweisen.

4. Kurbelwellentrieb nach Anspruch 3, **dadurch gekennzeichnet, dass** die Lageroberfläche oder die Beschichtung aus einer Nichteisenmetalllegierung, vorzugsweise aus einer Legierung, die Kupfer oder Bronze enthält, besteht.

## Revendications

1. Un mécanisme d'embiellage, de préférence pour moteurs à combustion interne et compresseurs, avec bielle et piston, dans lequel la bielle (1) est reliée au piston (2) au moyen d'un blocage positif sans un axe de piston, la bielle (1) comprenant une tête orientable (3) comme élément de blocage positif sur la queue de piston avec un profil courbe circonférentiel externe (5) et le piston comprenant une coquille orientable (4) qui est ouverte vers l'arrière du piston et qui possède une surface de guidage (6) en contact avec le profil courbe (5) **caractérisé en ce que** le profil courbe de la tête orientable (5) et la surface de guidage de la coquille orientable (4) attribuée au profil courbe sont conçus comme des surfaces de segment de cylindre qui s'étendent sur un angle (α) de plus de 180 degrés, **en ce que** la coquille orientable (4) enveloppe complètement le profil courbe (5) de la tête orientable et **en ce que** le collet (7) suit la tête orientable (3), dont le profil est encastré à tel point que le piston (2) et la bielle (1) peuvent effectuer des mouvements d'orientation l'un par rapport à l'autre.

2. Le mécanisme d'embiellage selon la revendication 1 **caractérisé en ce que** la coquille orientable (4) est disposée à l'intérieur du piston (2) et **en ce que** la jupe du piston (8) contient au moins un chambrage (9) à travers lequel la tête orientable peut être insérée dans la coquille orientable (4).

3. Le mécanisme d'embiellage selon la revendication 1 ou 2 **caractérisé en ce que**
la tête orientable (3) sur la queue de piston de la bielle (1) et/ou la coquille orientable attribuée (4) du piston (2) ont une surface de contact résistante à l'usure et/ou réduisant le frottement ou un revêtement au moins sur leurs surfaces qui sont en contact l'une avec l'autre.

4. Le mécanisme d'embiellage selon la revendication 3 **caractérisé en ce que** la surface de contact ou le revêtement est composée d'un alliage métallique non ferreux, de préférence un alliage contenant du cuivre ou du bronze.
